# EUROPEAN PATENT SPECIFICATION

(11) **EP 3 420 429 B1**
(45) Date of publication and mention of the grant of the patent: **12.02.2020**
(21) Application number: 16706344.5
(22) Date of filing: 23.02.2016
(51) Int. Cl.: G05D 7/06, G05D 9/12, B67D 7/02

(54) **APPARATUS ARRANGED FOR PROVIDING LIQUID FROM A STORAGE CONTAINER TO A LIQUID INTAKE DEVICE**
VORRICHTUNG ZUR BEREITSTELLUNG EINER FLÜSSIGKEIT AUS EINEM VORRATSBEHÄLTER ZU EINER FLÜSSIGKEITSEINLASSVORRICHTUNG
APPAREIL ORGANISÉ POUR FOURNIR UN LIQUIDE D'UN RÉCIPIENT DE STOCKAGE A UN DISPOSITIF D'ADMISSION DE LIQUIDE

(43) Date of publication of application: 02.01.2019
(73) Proprietor: Ecolab USA Inc., St. Paul, MN 55102 (US)
(72) Inventor: ALBRECHT, Rudolf, 83043 Bad Aibling (DE); RUPPERT, Andreas, 83313 Siegsdorf (DE)
(74) Representative: Michalski Hüttermann & Partner Patentanwälte mbB
(86) International application number: PCT/EP2016/053778
(87) International publication number: WO 2017/144083

(56) References cited:
- EP-A1- 1 533 268
- EP-A1- 1 820 518
- WO-A1-2013/162560
- WO-A2-2004/095017
- DE-A1-102010 019 479
- US-B1- 6 206 240

## Description

### Field of the Invention

The invention relates to an apparatus arranged for providing liquid from a storage container to a liquid intake device, especially a dosing device. The invention further relates to a corresponding liquid intake system with a liquid intake device and an apparatus arranged for providing liquid from a storage container to the liquid intake device.

### Background of the Invention

Dosing systems implemented as a dosing station, e.g. for wall installation, arranged for providing liquid from a storage container, like a canister, to a dosing device of the system have previously been disclosed. Such systems generally include an apparatus arranged for providing liquid from a storage container to a liquid intake device. One example of such an apparatus and dosing system is disclosed in DE 10 2010 019 479 B4. The corresponding apparatus for providing liquid from a storage container of this dosing system comprises: (i) a suction lance as an extraction probe for extracting liquid out of the storage container; (ii) a reservoir connected to said extraction probe via a suction pipe; (iii) a feeding line connecting the buffer reservoir to the dosing device; (iv) a venting line connecting the reservoir with an air outlet of the apparatus via a peristaltic pump; and (v) two liquid level detector systems for detecting the liquid level in the buffer reservoir.

An apparatus of the type disclosed in DE 10 2010 019 479 B4 is capable of (1) emptying the storage container almost completely and (2) providing liquid free from air or other gases and that (b) the storage container can be emptied almost completely. However, a significant deficiency of such an implementation as a dosing station is the low mobility of the dosing station. Document EP 1 820 518 A1 shows a quite similar apparatus.

Therefore, one object underlying the present invention is to provide an apparatus arranged for providing liquid from a storage container to a liquid intake device as well as the corresponding liquid intake system, which are more flexible in use because of the mobility of the apparatus.

### Summary of the Invention

This object is achieved by the invention as defined by the independent claims. The dependent claims detail advantageous embodiments of the invention.

According to various aspects of the invention, the apparatus arranged for providing liquid from a storage container to a liquid intake device comprises:
(i) an extraction probe for extracting liquid out of the storage container;
(ii) a buffer reservoir connected to the extraction probe;
(iii) a feeding line connecting the buffer reservoir to a liquid outlet of the apparatus, which liquid outlet is adapted for establishing a connection to the liquid intake device;
(iv) a venting line connecting the buffer reservoir with an air outlet of the apparatus;
(v) a contact-free liquid level detector for detecting the liquid level in the buffer reservoir; and
(vi) a support for mounting the apparatus on the storage container in such way, that the extraction probe extends through a liquid outlet of the storage container into the interior of said storage container, wherein the apparatus is adapted for a direct installation on the storage container.

In other words, the apparatus according to these aspects of the invention is an apparatus adapted for direct installation at/on the storage container and for a connection to a liquid intake device like a dosing device comprising a dosing pump or any other liquid pumping device. The contact-free liquid level detector for detecting the liquid level in the buffer reservoir takes up only little space and ensures proper function. Since the apparatus is mounted/installed on the storage container for the utilization phase only and not permanently, said apparatus can be used much more flexible.

On the other hand, due to this non-permanent installation, the apparatus preferably comprises safety measures for preventing a leakage of liquid from the buffer reservoir via the venting line and the air outlet respectively. Therefore, the venting line and/or the connection of the venting line with the buffer reservoir comprise(s) a waterproof (but breathable) membrane for preventing a leakage of liquid via the venting line. This membrane preferably is a waterproof, breathable fabric membrane, e.g. a Gore-Tex™ membrane. The major advantages of emptying a storage container by use of this kind of apparatus is that the liquid can be provided free from air or other gases (free of blow-holes), the storage container can be emptied almost completely, an out-of-liquid detection is automatically implied and the apparatus is movable and therefore very flexible in use. All these advantages are of particular value when providing hazardous chemicals from the storage containers.

According to a preferred embodiment of the present invention, the apparatus further comprises a sensing device for determining whether the apparatus is mounted at/on the storage container via the support. Preferably, the sensing device is formed as a button type sensing device with a "connected finger".

In accordance with another aspect of the present invention, the support for mounting the apparatus on the storage container is adapted for providing a connection with a nozzle (or tubular mouthpiece) forming the liquid outlet of the storage container. Many storage containers, like e.g. canisters and so-called save packages for chemical products, do have liquid outlets formed as nozzles. These kinds of nozzles often comprise external threads and/or additional collars. Many storage containers are equipped with standard-type nozzles showing these attributes. The support for mounting the apparatus on the storage container preferably uses further standard attributes like a cap nut arranged for a form fit with the external thread of the nozzle or lever arms arranged for a form fit with the collar surrounding the nozzle.

According to another preferred embodiment of the present invention, the extraction probe comprises a hollow needle, which hollow needle preferably is surrounded by a socket-like safety component. Such kind of extraction probe with a hollow needle (with a sharpened tip) is, e.g., known from a device for dispensing liquids from a storage container provided with a liquid outlet formed as a substantially nozzle or tubular mouthpiece, which device is described in document US 2005/0103810 A1. The needle is arranged for providing a fluidic connection to a suction lance installed in the interior of the storage container.

In general an external air venting pump may be connected to the venting line via the air outlet. According to a preferred embodiment of the present invention, the apparatus further comprises an air venting pump arranged in the venting line.

Preferably, the apparatus further comprises an activated carbon filter arranged in the venting line.

In accordance with another aspect of the present invention, the apparatus further comprises a non-return valve arranged in the feeding line. The non-return valve prevents a reflux/backflow of liquid in the feeding line from the liquid outlet back to the buffer reservoir.

According to yet another preferred embodiment of the present invention, the apparatus comprises a sensor for measuring tilt angles of the apparatus with respect to gravity, especially an inclinometer or a (3D-)acceleration sensor. The sensor is preferably realized as a MEMS sensor (MEMS: Micro-Electro-Mechanical system).

According to yet another preferred embodiment of the present invention, the apparatus further comprises an electronic evaluation unit for evaluation of an out-of-liquid state of the storage container. Thereby the electronic evaluation unit is in signal connection to the contact-free liquid level detector. In other words, a signal line is connecting the electronic evaluation unit to the contact-free liquid level detector.

In accordance with yet another aspect of the present invention, the electronic evaluation unit further on is in signal connection to the sensing device. By use of this signal connection the electronic evaluation unit is able to take the mounting state of the apparatus into account. Preferably, the electronic evaluation unit or another evaluation electronic of the apparatus is in signal connection to the sensor for measuring the tilt angles of the apparatus with respect to gravity. The evaluated data from the sensor can, e.g., be used for controlling a safety shut-off of the air venting pump.

According to a preferred embodiment of the present invention, the electronic evaluation unit is part of a control unit, in signal connection to a control unit or at least connectable to an external control unit.

According to another preferred embodiment of the present invention, the electronic evaluation unit is in signal connection to the air venting pump. By use of this signal connection the electronic evaluation unit (or the control unit respectively) is able to perform an automatic venting step.

According to yet another preferred embodiment of the present invention, the apparatus further comprises an output device arranged for providing a signal like an out-of-liquid alarm signal. In the simplest case the output device is a warning lamp (e.g. an LED-light) and/or an alarm bell.

According to another preferred embodiment of the present invention, the contact-free liquid level detector is arranged for a capacitive measurement of the liquid level or an inductive measurement of the liquid level.

The present invention further refers to a liquid intake system comprising: (a) a liquid intake device including a pump; and (b) an apparatus arranged for providing liquid from a storage container to said liquid intake device, which apparatus is designed as an aforementioned apparatus. A suction connection of the liquid intake device is connected to the liquid outlet of the apparatus arranged for providing liquid from the storage container.

According to a preferred embodiment of the present invention, the liquid intake device is a dosing device comprising a dosing pump.

### Detailed Description of the Invention

Additional details, features, characteristics and advantages of the object of the invention are disclosed in the figures and the following description of the respective figures, which - in exemplary fashion - show one embodiment and an example of a dispensing system according to the invention. In the drawings:
- Fig. 1: shows a schematic illustration of an apparatus for providing liquid from a storage container according to several preferred embodiments of the invention, which apparatus is mounted on said storage container; and
- Fig. 2: shows a sectional view of a specific design of the apparatus described schematically in fig. 1.

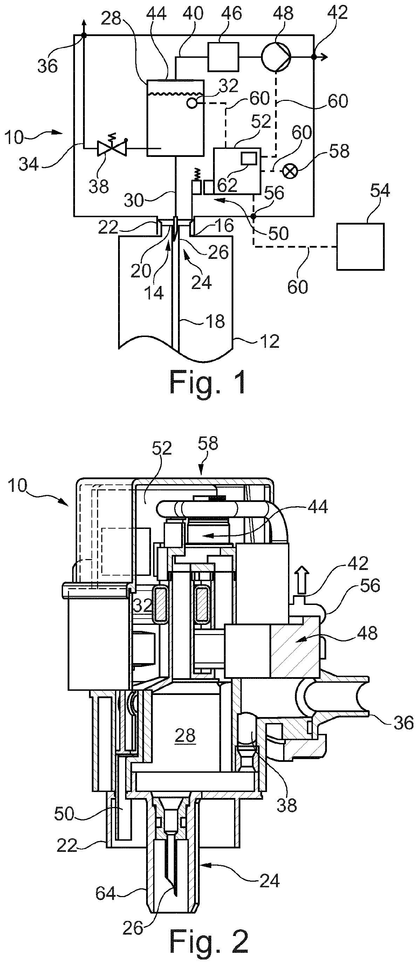

The illustration in Fig. 1 shows an apparatus 10 arranged for providing liquid from a storage container 12 to a liquid intake device like a dosing device. The storage container 12 is a canister, a safe package canister to be precise. The storage container 12 comprises a liquid outlet 14 formed by a nozzle 16 on the upper side of the container 12 and an integrated suction lance (suction pipe) 18 in the interior of the container 12. The suction lance 18 extends from the bottom area of the interior (not shown) up to the liquid outlet 14 of the container 12, which outlet 12 is closed by a membrane 20.

The apparatus 10 arranged for providing liquid from the storage container 12 comprises a support 22 for mounting the apparatus 10 on the liquid outlet 14 of said storage container 12 so that an extraction probe (shown in detail in fig. 2) 24 extends with a hollow needle 26 through said liquid outlet 14 of the storage container 12 and the membrane 20 closing this outlet 14 into the interior of said storage container 12, or more precisely in the upper opening of the suction lance 18. The extraction probe 24 is arranged for extracting liquid out of the storage container 12. Further on, the apparatus 10 comprises a buffer reservoir 28 connected to the extraction probe 24 via a suction pipe 30 and a contact-free liquid level detector 32 for detecting the liquid level in the buffer reservoir 28.

The apparatus 10 further comprises a feeding line 34 connecting the buffer reservoir 28 to a liquid outlet 36 of the apparatus 10. A non-return valve 38 is arranged in the feeding line 34 and the liquid outlet 36 is adapted for establishing a connection to (the suction line of) a liquid intake device like a dosing device (not shown). Further on, the apparatus 10 comprises a venting line 40 connecting the buffer reservoir 28 to an air outlet 42 of the apparatus 10, wherein the connection of the buffer reservoir 28 to the venting line 40 comprises a waterproof breathable membrane 44 for preventing a leakage of liquid via the venting line 40 and the air outlet 42. Further on an activated carbon filter 46 and an air venting pump (purge pump) 48 are arranged in the venting line 40 too.

The apparatus 10 further comprises a sensing device 50 for determining whether the apparatus 10 is mounted on the storage container 10 via the support 22. The sensing device 50 is formed as a button type sensing device with a "connected finger" coupled to a magnet, a spring and a magnetic field sensor (e.g. a hall element) for detecting the position of the magnet. Further on, the apparatus 10 includes an electronic evaluation unit 52 for evaluation of an out-of-liquid state of the storage container 12 (and optional other states either), wherein the electronic evaluation unit 52 is in signal connection to the contact-free liquid level detector 32, to (the magnetic field sensor of) the sensing device 50, the venting pump 48, an external control unit 54 via a signal connection 56, and an output device 58 of the apparatus 10 being an OP mode LED via signal lines 60. Said external control unit 54 is, e.g., the control unit of a higher level system including the apparatus 10 and the above mentioned (but not shown) liquid intake device comprising a pump fluidically connected to the feeding line 34 via the liquid outlet 36. The external control unit 54 controls -among others- the pump of the liquid intake device.

One main application for this kind of apparatus 10 is providing (liquid) chemical products from a storage container 12 to a corresponding liquid intake device. Some of these chemical products are very aggressive. As a result the demand for the aforementioned safe packages is increasing. Such safe packages typically do not have an opening where a state of the art suction lance could be placed. The safety packages instead have a coupling system on top of the storing container (product canister) 12. Low level detection is critical with regard to a change of the storage container. The apparatus 10 enables a contactless out of product detection. The full automatic venting technology ensures that the product lines will be refilled after a change of the (liquid) chemical product. This venting will start automatically after a reconnection to a new container/canister.

The above described construction of the apparatus 10 now results in the following function of said apparatus:
Initial state: If no container 12 is connected to the apparatus 10, and lines 30, 34, 40 as well as the buffer reservoir 28 are empty, the "connected-finger" of the switch-like sensing device 50 is pressed out by the spring. The magnet leaves the area of the magnetic field sensor and the electronic unit 52 switches to "non-connected" mode. As a result of that the OP mode LED 58 is flashing red. The signal to the controller unit 54 is logic low ("empty").

Connecting a container step: If a full container is connected to the apparatus 10, the "connected-finger" will be pressed upwards, the magnet is now in front of the magnetic field sensor, and the electronic evaluation unit 52 switches to "connected" mode. As a result of that the OPmode LED 58 is flashing green and the venting pump 48 begins to work and the pipe 30 as well as the buffer reservoir 28 will be filled with liquid from the container 12. As soon as the contact-free liquid level detector 32 (e.g. an inductive conductivity sensor) will detect the liquid, the air venting pump 48 will stop and the OP-mode LED 58 will switch to green. The signal to the control unit 54 will go to logic high ("Full"). Now the controller unit 54 can run the dosing process.

Degassing step: If the liquid filling level in the buffer reservoir 28 will fall below the a certain level given by the level detector 32, the air venting pump 48 will start for a certain time (=degassing time). During that time the signal to the controller unit 54 is still logic high ("full") and the OP-mode LED 58 is still lighting green.

Emptying container step: It starts in the same procedure like described in "degassing-mode". If the degassing time ran down the system switches to "empty". As a result the venting pump 48 switches off, the OP-mode LED 58 lights up red and the signal to the controller unit 54 is moving to logic low ("empty").

The system is now expecting a decoupling of the container 12 from the support 22 and a connection of a new (full) container 12 to the apparatus 10. Afterwards the process starts again with the described initial state).

Timescale of these steps: "Degassing time" is a short time in which the sensor level has to be reached. Otherwise there is an alarm "empty". "Refill time": This time is longer than the "degassing time" and allows an empty system to refill.

The electronic evaluation unit 52 for evaluation of an out-of-liquid state of the storage container 12 shown in fig. 1 further comprises a sensor 62 for measuring tilt angles of the apparatus 10 with respect to gravity. The sensor 62 is preferably realized as a MEMS sensor. The evaluated data from said sensor 62 are used for controlling a safety shut-off of the air venting pump 48. In case of the detection of an inclined position of the apparatus 10, a running venting process is stopped and a fault signal or an empty signal is transmitted to the external control unit 54 to prevent an intake of air via the feeding line 34.

Fig. 2 shows a sectional view of a specific design of the apparatus 10 described schematically in fig. 1. The hollow needle 26 of the extraction probe 24 is surrounded by a socket-like safety component 64. This socket-like safety component 64 is for his part at least partially surrounded by a socket-like component of the support 22. Both socket-like components are arranged coaxially. The gap between the two coaxially arranged socket-like components is intended for the inclusion of the nozzle 16 of the container 12. The tip of the "connected-finger" of the switch type sensing element 50 is located in the gap either. The buffer reservoir 28 is located above the extraction probe 24 directly beside the sensing device 50. On the other side of the buffer reservoir 28 is a module comprising the air outlet 44, the liquid outlet 36 and the signal connection (signal interface) 56. The level detector 32 is located above the sensing device 50 and the waterproof membrane 44 is located on top of the buffer reservoir 28 next to the electronic evaluation unit 52. Finally, on top of the apparatus 10 the OP-mode LED 58 is installed.

## Claims

1. An apparatus (10) arranged for providing liquid from a storage container (12) to a liquid intake device, especially a dosing device, the apparatus (10) comprising:
- an extraction probe (24) for extracting liquid out of the storage container (12);
- a buffer reservoir (28) connected to the extraction probe (24);
- a feeding line (34) connecting the buffer reservoir (28) to a liquid outlet (36) of the apparatus (10), which liquid outlet (36) is adapted for establishing a connection to the liquid intake device;
- a venting line (40) connecting the buffer reservoir (28) with an air outlet (42) of the apparatus (10);
- a contact-free liquid level detector (32) for detecting the liquid level in the buffer reservoir (28); and
- a support (22) for mounting the apparatus (10) on the storage container (12) in such way, that the extraction probe (24) extends through a liquid outlet (14) into the interior of the storage container (12), wherein the apparatus (10) is adapted for a direct installation on the storage container (12).

2. The apparatus according to claim 1, wherein the venting line (40) and/or the connection of the venting line (40) with the buffer reservoir (28) comprises a waterproof membrane (44) for preventing a leakage of liquid via the venting line (40).

3. The apparatus according to claim 1 or 2, further comprising a sensing device (50) for determining whether the apparatus (10) is mounted at/on the storage container (12) via the support (22).

4. The apparatus according to one of claims 1 to 3, wherein the support (22) for mounting the apparatus (10) on the storage container (12) is adapted for providing a connection with a nozzle (16) forming the liquid outlet (14) of said storage container (12).

5. The apparatus according to one of claims 1 to 4, wherein the extraction probe (24) comprises a hollow needle (26), which hollow needle (26) preferably is surrounded by a socket-like safety component (64).

6. The apparatus according to one of claims 1 to 5, further comprising an air venting pump (48) arranged in the venting line (40).

7. The apparatus according to one of claims 1 to 6, further comprising a sensor (62) for measuring tilt angles of the apparatus (10) with respect to gravity.

8. The apparatus according to one of claims 1 to 7, further comprising an electronic evaluation unit (52) for evaluation of an out-of-liquid state of the storage container (12), wherein the electronic evaluation unit (52) is in signal connection to the contact-free liquid level detector (32).

9. The apparatus according to claim 8, wherein the electronic evaluation unit (52) further on is in signal connection to the sensing device (50).

10. The apparatus according to claim 8 or 9, wherein the electronic evaluation unit (52) is part of a control unit (54), in signal connection to a control unit (54) or at least connectable to an external control unit (54).

11. The apparatus according to one of claims 8 to 10, wherein the electronic evaluation unit (52) is in signal connection to the air venting pump (48).

12. The apparatus according to one of claims 1 to 11, further comprising an output device (58) arranged for providing a signal.

13. The apparatus according to one of claims 1 to 12, wherein the contact-free liquid level detector (32) is arranged for a capacitive measurement of the liquid level or an inductive measurement of the liquid level.

14. A liquid intake system comprising:
- a liquid intake device comprising a pump; and
- an apparatus (10) arranged for providing liquid from a storage container (12) to the liquid intake device, wherein the apparatus (10) is an apparatus according to one of claims 1 to 13.

15. The system according to claim 14, wherein the liquid intake device is a dosing device comprising a dosing pump.

## Patentansprüche

1. Einrichtung (10), die zum Bereitstellen einer Flüssigkeit aus einem Vorratsbehälter (12) zu einer Flüssigkeitsaufnahmevorrichtung eingerichtet ist, insbesondere einer Dosiervorrichtung, wobei die Einrichtung (10) Folgendes umfasst:
- eine Extraktionssonde (24) zum Extrahieren von Flüssigkeit aus dem Vorratsbehälter (12);
- einen Pufferspeicher (28), der mit der Extraktionssonde (24) verbunden ist;
- eine Zuführleitung (34), die den Pufferspeicher (28) mit einem Flüssigkeitsauslass (36) der Einrichtung (10) verbindet, wobei der Flüssigkeitsauslass (36) zum Herstellen einer Verbindung mit der Flüssigkeitsaufnahmevorrichtung geeignet ist;
- eine Entlüftungsleitung (40), die den Pufferspeicher (28) mit einem Luftauslass (42) der Einrichtung (10) verbindet;
- einen kontaktlosen Flüssigkeitsniveaudetektor (32) zum Erfassen des Flüssigkeitsniveaus in dem Pufferspeicher (28); und
- eine Stütze (22) zum Anbringen der Einrichtung (10) auf dem Vorratsbehälter (12) derart, dass sich die Extraktionssonde (24) durch einen Flüssigkeitsauslass (14) in das Innere des Vorratsbehälters (12) erstreckt, wobei die Einrichtung (10) für eine direkte Installation auf dem Vorratsbehälter (12) geeignet ist.

2. Einrichtung nach Anspruch 1, wobei die Entlüftungsleitung (40) und/oder die Verbindung der Entlüftungsleitung (40) mit dem Pufferspeicher (28) eine wasserdichte Membran (44) zum Verhindern eines Flüssigkeitsaustritts über die Entlüftungsleitung (40) umfasst.

3. Einrichtung nach Anspruch 1 oder 2, ferner umfassend eine Abtastvorrichtung (50) zum Bestimmen, ob die Einrichtung (10) über die Stütze (22) an/auf dem Vorratsbehälter (12) angebracht ist.

4. Einrichtung nach einem der Ansprüche 1 bis 3, wobei die Stütze (22) zum Anbringen der Einrichtung (10) auf dem Vorratsbehälter (12) zum Bereitstellen einer Verbindung mit einer Tülle (16) geeignet ist, die den Flüssigkeitsauslass (14) des Vorratsbehälters (12) ausbildet.

5. Einrichtung nach einem der Ansprüche 1 bis 4, wobei die Extraktionssonde (24) eine Hohlnadel (26) umfasst, wobei die Hohlnadel (26) vorzugsweise von einer buchsenartigen Sicherheitskomponente (64) umgeben ist.

6. Einrichtung nach einem der Ansprüche 1 bis 5, ferner umfassend eine in der Entlüftungsleitung (40) angeordnete Entlüftungspumpe (48).

7. Einrichtung nach einem der Ansprüche 1 bis 6, ferner umfassend einen Sensor (62) zum Messen von Neigungswinkeln der Einrichtung (10) in Bezug auf die Schwerkraft.

8. Einrichtung nach einem der Ansprüche 1 bis 7, ferner umfassend eine elektronische Auswertungseinheit (52) zum Auswerten eines Leer-Zustandes des Vorratsbehälters (12), wobei die elektronische Auswertungseinheit (52) in Signalverbindung mit dem kontaktlosen Flüssigkeitsniveaudetektor (32) steht.

9. Einrichtung nach Anspruch 8, wobei die elektronische Auswertungseinheit (52) ferner in Signalverbindung mit der Abtastvorrichtung (50) steht.

10. Einrichtung nach Anspruch 8 oder 9, wobei die elektronische Auswertungseinheit (52) Teil einer Steuereinheit (54) ist, in Signalverbindung mit einer Steuereinheit (54) steht oder mindestens mit einer externen Steuereinheit (54) verbunden werden kann.

11. Einrichtung nach einem der Ansprüche 8 bis 10, wobei die elektronische Auswertungseinheit (52) in Signalverbindung mit der Entlüftungspumpe (48) steht.

12. Einrichtung nach einem der Ansprüche 1 bis 11, ferner umfassend eine Ausgabevorrichtung (58), die zum Bereitstellen eines Signals angeordnet ist.

13. Einrichtung nach einem der Ansprüche 1 bis 12, wobei der kontaktlose Flüssigkeitsniveaudetektor (32) für eine kapazitive Messung des Flüssigkeitsniveaus oder eine induktive Messung des Flüssigkeitsniveaus angeordnet ist.

14. Flüssigkeitsaufnahmesystem, das Folgendes umfasst:
- eine Flüssigkeitsaufnahmevorrichtung, die eine Pumpe umfasst; und
- eine Einrichtung (10), die zum Bereitstellen einer Flüssigkeit aus einem Vorratsbehälter (12) zu der Flüssigkeitsaufnahmevorrichtung eingerichtet ist, wobei die Einrichtung (10) eine Einrichtung nach einem der Ansprüche 1 bis 13 ist.

15. System nach Anspruch 14, wobei die Flüssigkeitsaufnahmevorrichtung eine Dosiervorrichtung ist, die eine Dosierpumpe umfasst.

## Revendications

1. Appareil (10) conçu pour fournir du liquide d'un récipient de stockage (12) à un dispositif d'admission de liquide, en particulier un dispositif de dosage, l'appareil (10) comprenant :
- une sonde d'extraction (24) permettant d'extraire le liquide hors du récipient de stockage (12) ;
- un réservoir tampon (28) relié à la sonde d'extraction (24) ;
- une conduite d'alimentation (34) reliant le réservoir tampon (28) à une sortie de liquide (36) de l'appareil (10), ladite sortie de liquide (36) est adaptée pour établir une connexion avec le dispositif d'admission de liquide ;
- une conduite de ventilation (40) reliant le réservoir tampon (28) à une sortie d'air (42) de l'appareil (10) ;
- un détecteur de niveau de liquide sans contact (32) permettant de détecter le niveau de liquide dans le réservoir tampon (28) ; et
- un support (22) pour le montage de l'appareil (10) sur le récipient de stockage (12) de telle sorte que la sonde d'extraction (24) se prolonge à travers une sortie de liquide (14) à l'intérieur du récipient de stockage (12), l'appareil (10) étant conçu pour une installation directe sur le récipient de stockage (12).

2. Appareil selon la revendication 1, dans lequel la conduite de ventilation (40) et/ou le raccordement de la conduite de ventilation (40) au réservoir tampon (28) comprend une membrane imperméable à l'eau (44) permettant d'empêcher une fuite de liquide par l'intermédiaire de la conduite de ventilation (40).

3. Appareil selon la revendication 1 ou la revendication 2, comprenant en outre un dispositif de détection (50) permettant de déterminer si l'appareil (10) est monté au niveau du/sur le récipient de stockage (12) par l'intermédiaire du support (22).

4. Appareil selon l'une quelconque des revendications 1 à 3, dans lequel le support (22) pour monter l'appareil (10) sur le récipient de stockage (12) est conçu pour fournir un raccordement avec une buse (16) formant la sortie de liquide (14) dudit récipient de stockage (12).

5. Appareil selon l'une quelconque des revendications 1 à 4, dans lequel la sonde d'extraction (24) comprend une aiguille creuse (26), ladite aiguille creuse (26) est de préférence entourée d'un composant de sécurité (64) analogue à une douille.

6. Appareil selon l'une quelconque des revendications 1 à 5, comprenant en outre une pompe de ventilation à air (48) agencée dans la conduite de ventilation (40).

7. Appareil selon l'une quelconque des revendications 1 à 6, comprenant en outre un capteur (62) permettant de mesurer les angles d'inclinaison de l'appareil (10) par rapport à la gravité.

8. Appareil selon l'une quelconque des revendications 1 à 7, comprenant en outre une unité d'évaluation électronique (52) permettant d'évaluer un état non liquide du récipient de stockage (12), l'unité d'évaluation électronique (52) étant en connexion de signal avec le détecteur de niveau de liquide sans contact (32).

9. Appareil selon la revendication 8, dans lequel l'unité d'évaluation électronique (52) est en outre en connexion de signal avec le dispositif de détection (50).

10. Appareil selon la revendication 8 ou la revendication 9, dans lequel l'unité d'évaluation électronique (52) fait partie d'une unité de commande (54), en connexion de signal avec une unité de commande (54) ou au moins pouvant être connectée à une unité de commande externe (54).

11. Appareil selon l'une quelconque des revendications 8 à 10, dans lequel l'unité d'évaluation électronique (52) est en connexion de signal avec la pompe de ventilation à air (48).

12. Appareil selon l'une quelconque des revendications 1 à 11, comprenant en outre un dispositif de sortie (58) conçu pour fournir un signal.

13. Appareil selon l'une quelconque des revendications 1 à 12, dans lequel le détecteur de niveau de liquide sans contact (32) est conçu pour effectuer une mesure capacitive du niveau de liquide ou une mesure inductive du niveau de liquide.

14. Système d'admission de liquide comprenant :
- un dispositif d'admission de liquide comprenant une pompe ; et
- un appareil (10) conçu pour fournir du liquide d'un récipient de stockage (12) au dispositif d'admission de liquide, l'appareil (10) étant un appareil selon l'une quelconque des revendications 1 à 13.

15. Système selon la revendication 14, dans lequel le dispositif d'admission de liquide est un dispositif de dosage comprenant une pompe de dosage.
